# EUROPEAN PATENT SPECIFICATION

(11) **EP 2 096 211 B1**
(45) Date of publication and mention of the grant of the patent: **24.07.2013**
(21) Application number: 09153792.8
(22) Date of filing: 26.02.2009
(51) Int. Cl.: E01C 13/08, B29B 17/02

(54) **Disposal system of synthetic grass or similar surfaces**
Entsorgungssystem für Kunstgras oder ähnliche Flächen
Système de mise au rebut de gazon synthétique ou surfaces similaires

(30) Priority: 28.02.2008 IT MC20080034
(43) Date of publication of application: 02.09.2009
(73) Proprietor: Fazzini, Francesco, 63033 Monteprandone (AP) (IT)
(72) Inventor: Fazzini, Francesco, 63033 Monteprandone (AP) (IT)
(74) Representative: Baldi, Claudio

(56) References cited:
- EP-A- 1 319 753
- WO-A-99/36178
- WO-A-2009/022447
- JP-A- 2002 192 120
- JP-A- 2007 132 116
- JP-A- 2008 036 550
- US-A- 5 497 949
- US-A- 5 535 945

## Description

The present patent application for industrial invention relates to a system for implementing **a disposal method of synthetic grass or similar surfaces method.**

"Disposal of synthetic grass or similar surfaces" refers to the processing operations that are necessary to reuse or recycle the same surfaces.

In recent years the use of synthetic grass surfaces has become more and more popular, especially for sports fields, and in particular football pitches, in which synthetic grass surfaces more and more often replace natural surfaces (normally grass).

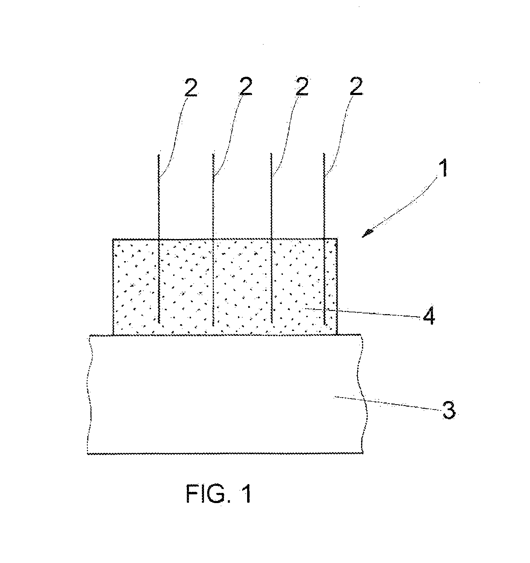

Synthetic grass surfaces are described below, in general terms, with reference to figure 1.

The synthetic grass surface of a sports field comprises a synthetic grass turf associated to a so-called "infill". the synthetic grass turf is composed of a carpet and filaments that are sewn onto the carpet; then the infill is spread on the carpet, being a loose material, such as sand and/or recycled rubber and/or vegetal fibres and/or similar materials.

The infill is designed to provide the field with the ideal characteristics of elasticity, reliability and safety. Moreover, the infill supports the grass filaments that would otherwise be knocked down on the surface of the carpet, in a similar way to a grain field knocked down by the wind.

Synthetic grass surfaces are subject to wear caused by continuous trampling and weather agents and therefore have an expected life of approximately eight-ten years from installation; being normally made of non-biodegradable materials, it is necessary to identify an ecological disposal method for the surfaces to be replaced, especially in consideration of the considerable amount of material to be disposed of: in one regulation size football pitch (112x72m) with synthetic grass surface, there are about 8 064 square metres of synthetic grass turf (approx. weight 32 000 kg), on which a 10 mm layer of spheroidal sand (weight approx. 80 000 kg) and recycled rubber with weight ranging from about 80 000 kg to 120 000 kg is spread.

The importance of having an efficacious, rapid and relatively inexpensive method for the ecological disposal of synthetic grass surfaces is therefore evident, as shown by the aforementioned figures.

No specific method for the disposal of synthetic grass surfaces has been developed so far.

US 5 497 949 discloses an apparatus for reclaiming waste carpeting comprising a granulator and a aerodynamic separator.

JP2002192120 discloses a method to provide a recycling material from an artificial lawn.

JP2007132116 discloses a method of collecting and reusing sand-containing artificial lawn.

US 5 535 945 discloses a carpet recycling process and system. WO99/36178 discloses a system for reclaiming backing material from waste carpet.

The present invention relates to a system **according to claim 1**.

According to a basic embodiment, the system of the present invention allows for dividing the synthetic grass turf in its various materials, after separating the infill from the turf.

According to a more advanced embodiment, the system allows for dividing the entire synthetic grass surface, that is to say both the turf and the infill.

Such a division is extremely useful to recycle the various materials of the surface or turf in an ecological and economically advantageous way, because some materials can be recycled rather than simply dumped. Further advantageous characteristics are the subject of the enclosed dependant claims.

These and other advantages will become evident after the description of the enclosed figures, wherein:
fig. 1 is a cross-sectional view of a generic synthetic grass surface
fig. 2 is a flow diagram of the disposal method according to the present invention.

For merely indicative purposes, fig. 1 illustrates a section of a synthetic grass surface (1) comprising: the individual synthetic grass filaments (2) fixed to a carpet (3) on which the infill (4) is spread.

The synthetic grass filaments (2) are sewn to the carpet (3); the carpet (3) and the grass filaments (2) make up the turf of the surface (1).

Synthetic grass turfs are produced with suitable dimensions to make handling and transportation easier, for example in 8mx4m strips. To obtain a sports surface, it is necessary to lay turf strips in parallel arrangement on the area to be covered and join them, and then spread the infill (4) on the turf. The infill (4) is a loose material and is normally composed of the following materials: sand, recycled rubber, thermoplastic rubber (TPU), sand and rubber recycled from tyres (SBR, NR), sand and recycled rubber (EPDM), sand and thermoplastic rubber (TPU), sand and rubber recycled from technical uses (SBR), sand and natural material of coconut fibre and/or "improved" rubber, sand and thermoplastics and/or cork, sand and "improved" rubber. The term "improved rubber" normally indicates recycled rubber that is subjected to surface treatment with coloured polyurethane resins to encapsulate the granules.

The infill (4) gives the pitch the ideal characteristics of elasticity, reliability and safety; moreover, it supports the grass filaments that, due to their length, would otherwise be knocked down on the carpet.

Weather agents and trampling cause a degradation of the synthetic grass surface over time, with tested life ranging from approximately eight to ten years. After such a period of time, the synthetic grass surface must be normally removed and possibly replaced.

The disposal method of synthetic grass surfaces according to the present invention is an extremely ecological method that intends to maximise the recycling of the materials of the surface.

In the first place, the synthetic grass surface is removed from the place where it is installed, for example by cutting the turf at 4 m distance, that is to say on the connections between the turf strips. The length for the transversal cut is for example 8 m, that is to say on the longitudinal connections of the turf strips.

After cutting the turf, two different options are possible: the first solution consists in sucking the infill (4) from the surface, while the second solution consists in collecting the infill by enclosing it inside the turf strips that are rolled up.

More advantages are related with the second solution, although the first solution may be validly used in combination with the basic disposal method, while the second solution is more suitable for combination with the advanced disposal method, as described below.

Now, the synthetic grass strips are loaded on ordinary vehicles by means of hydraulic cranes or lift trucks, and sent to the disposal facility.

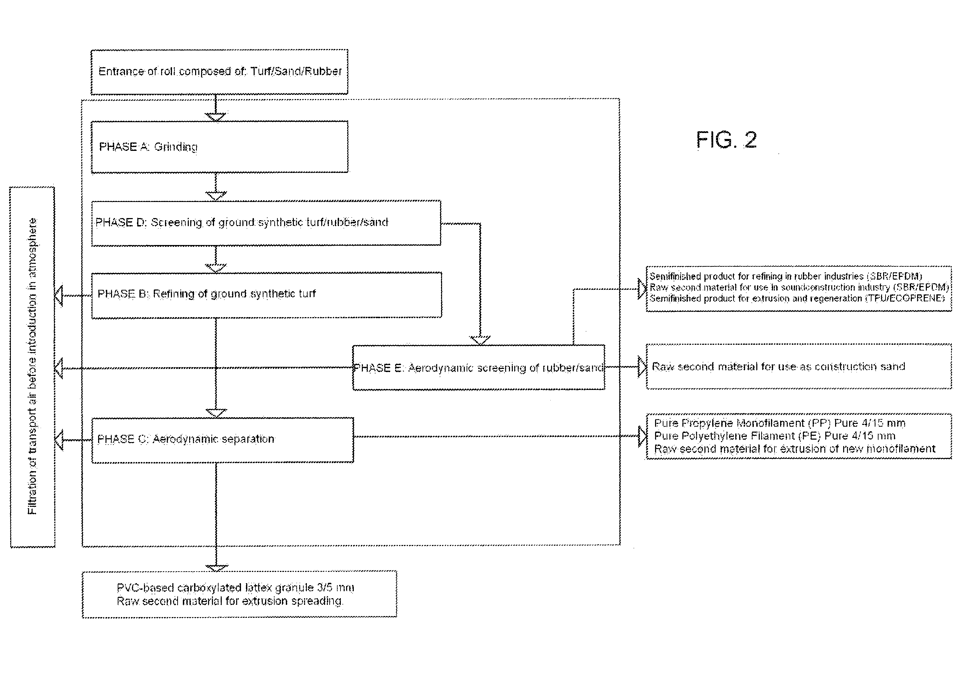

The basic disposal method is illustrated in fig. 2 and comprises at least phase A, phase B and phase C, being applied on turfs after removing the infill, for example by suction, as indicated above.

The basic disposal method comprises a grinding phase A of the turf, a refining phase B of the ground turf to detach the synthetic grass filaments (2) from the carpet (3) and granulate the carpet, and a separation phase C of the materials that make up the carpet (3) and the synthetic grass filaments (2).

Phase A can be carried out, for example, in a suitably dimensioned single - shaft grainer and/or in a double-shaft crusher (of known type); for example, the turf can be converted in pieces of about 100 x 300 mm.

Phase B can be carried out, for example, in a granulating mill (of known type) provided with a net with passages with dimensions ranging from 3 mm and 5 mm in the cutting chamber. During Phase B the synthetic grass filaments (2) are detached from the carpet (3) and the carpet is granulated.

It must be remembered that the grass filaments (2) are sewn to the carpet (3) by means of industrial sewing machines and that the texture of the stitching on the carpet normally has dimensions higher than 5 mm in order to be sufficiently strong.

Coming out of the granulating mill, the synthetic grass filaments (2) and the carpet (3) detach since the stitching of the synthetic grass filaments (2) is larger than the size of the passages of the net of the granulating mill.

Once detached from the carpet (3), being very ductile and very thin (their thickness being a few tens of mm), the filaments (2) can pass through the net of the cutting chamber regardless of the fact that their longitudinal dimension is larger than the mesh of the net, thus avoiding numerous cuts. Having a thickness higher than 3 mm, the carpet (3) is chopped up in the cutting chamber until a granulometry ranging from 3 to 5 mm is obtained. Phase C, that is to say the separation of the materials of the carpet (3) and synthetic grass filaments (2) of synthetic grass, can be carried out, for example, in an aerodynamic separator.

The materials of the synthetic grass filaments (2) and the carpet (3) coming out of the granulating mill are transported (for example by means of pneumatic transport) to the aerodynamic separator that separates the materials of the carpet (3) and synthetic grass filaments (2); separation is obtained because of the different apparent specific gravity of the product. The two materials are separated by regulating the air flow with the help of the gravitational force in opposition to the depression force contained in the machine.

The advanced disposal method, that is to say the disposal method of the synthetic grass surface (1), is basically identical to the aforementioned basic method, except for in this case the system is fed with the rolled turf containing the infill and therefore the method must include phases to separate the infill from the turf and treat the said infill specifically.

The advanced method comprises a grinding phase A of the surface (1), a screening phase D of the surface (1) to separate the turf from the infill (4), a refining phase B of the ground turf to detach the synthetic grass filaments (2) from the carpet (3) and granulate the carpet, a separation phase C of the materials of the carpet (3) and the synthetic grass filaments (2) and a screening phase E of the infill (4) to separate the various components of the infill (4).

Although it is simultaneously carried out on the turf and on the infill, phase A is the same as the phase A described above and can be carried out, for example, in a suitably dimensioned single-shaft grainer and/or in a double shaft crusher to convert the turf in pieces of about 100 x 300 mm; both the turf and the infill are mixed when coming out of phase A.

The screening phase D of the surface (1) is carried out to separate the turf from the infill, which can be carried out, for instance, by means of a gyratory screen with diameter hole equal to 4/5 mm.

The turf is then conveyed to a refiner for the execution of phase B (same as phase B above and therefore not described further), while the infill (4) is conveyed to a screen for the execution of phase E, in which the infill (4) is screened to separate its various components according to the filters used.

At the end of phase B the material is subject to phase C, which is the same as the one described above, to which reference must be made for detailed information.

The phase E can be carried out, for example, in a centrifugal, either level or gyratory, screen. The mesh of the screen can be a metal mesh with "mesh clear span" equal to 800 µm, for example in case of separation between rubber and sand.

Two materials are obtained from phase C: a granule of the material of the carpet (for example, PVC-based carboxylated latex granules), which can be recycled as raw material for extrusion and spreading processes, and the filaments separated from the carpet (for example made of polypropylene or polyethylene) that can be recycled, for instance, to produce new synthetic grass filaments by extrusion.

Phase E delivers the products that make up the infill, for instance sand and rubber, which can be recycled, for example in the constructions sector (sand) or in other sectors.

The processing air used in phases B and C can be advantageously reintroduced in the atmosphere after filtering.

The system for implementing said method may be implemented with additional steps or phases, according to the needs determined by the experts of the art.

Obviously, the aforementioned dimensions may be changed by the expert of the art without inventive effort, for example in order to size the system for other materials of carpet, infill or turf.

## Claims

1. System for disposal of a synthetic grass surface (1), in which the surface (1) comprises a synthetic grass turf, comprising at least a carpet (3) on which a plurality of synthetic grass filaments (2) is fixed, said system comprising:
- a single-shaft grainer and/or a double-shaft crusher designed to detach the synthetic grass filaments (2) from the carpet (3),
- a granulating mill designed to refine the ground turf to detach the synthetic grass filaments (2) from the carpet (3) and granulate the carpet,
- an aerodynamic separator designed to separate the materials that make up the carpet (3) and the synthetic grass filaments (2)
**characterized in that**
said synthetic grass surface (1) comprises an infill (4),
said system further comprising:
- a gyratory screen having 4/5 mm diameter holes designed to separate the turf from the infill (4), and
- a centrifugal screen to separate the materials of the infill (4).

2. System according to claim 1, **characterized in that** said centrifugal screen is provided with a metal mesh with "mesh clear span" equal to 800 µm.

3. System according to anyone of the preceding claims, **characterized in that** the single-shaft grainer and/or double-shaft crusher is suitable for convert the turf in pieces with approximately 110x300 mm dimensions, and the granulating mill being provided at least with a net with passage dimensions ranging from 3 to 5 mm approximately.

4. System according to anyone of the preceding claims, **characterized in that** said separator is of air-depression type, suitable for separate the materials by regulating the air flow with the help of the gravitational force in opposition to the depression force contained in the machine.

5. System according to anyone of the preceding claims **characterised in that** it comprises depuration filters to filter the processing air used in the granulating mill and/or aerodynamic separator before introduction in the atmosphere.

## Patentansprüche

1. Anlage für die Entsorgung von Kunstrasenflächen (1), bei der die Fläche (1) eine Kunstrasendecke umfasst, umfassend mindestens einen Teppich (3), auf dem eine Vielzahl von Kunstrasen-Filamenten befestigt ist, welche Anlage Folgendes umfasst:
- einen Einwellen-Granulator und/oder einen Doppelwellen-Brecher, die dazu geeignet sind, die Kunstrasen-Filamente (2) vom Teppich (3) abzutrennen,
- eine Schneidmühle, die dazu geeignet ist, die zerkleinerte Kunstrasendecke zu verfeinern, um die Kunstrasen-Filamente (2) vom Teppich (3) abzutrennen und den Teppich zu granulieren,
- einen aerodynamischen Abscheider, der dazu geeignet ist, die den Teppich (3) und die Kunstrasen-Filamente (2) bildenden Materialien voneinander zu trennen,
**dadurch gekennzeichnet, dass**
die Kunstrasenfläche (1) einen Füllstoff (4) umfasst,
wobei die Anlage außerdem Folgendes umfasst:
- ein rotierendes Sieb mit **Löchern im Durchmesser von 4/5 mm,** das dazu geeignet ist, die Kunstrasendecke vom Füllstoff (4) zu trennen, und
- ein Zentrifugalsieb, um die Materialien vom Füllstoff (4) zu trennen.

2. Anlage nach Anspruch 1, **dadurch gekennzeichnet, dass** das Zentrifugalsieb mit einem Metallnetz mit "lichter Maschenweite" von 800 µm versehen ist.

3. Anlage nach einem beliebigen der vorstehenden Ansprüche, **dadurch gekennzeichnet, dass** der Einwellen-Granulator und/oder der Doppelwellen-Brecher dazu geeignet ist, die Kunstrasendecke in Stücke einer Größe von ungefähr 110 × 300 mm zu zerkleinern und die Schneidmühle mit mindestens einem Netz mit Durchsatzgrößen zwischen 3 und 5 mm versehen ist.

4. Anlage nach einem beliebigen der vorstehenden Ansprüche, **dadurch gekennzeichnet, dass** der Abscheider ein Unterdruckabscheider ist, der dazu geeignet ist, die Materialien durch Regulierung des Luftstroms mit Hilfe der Schwerkraft entgegen dem in der Maschine herrschenden Unterdruck zu trennen.

5. Anlage nach einem beliebigen der vorstehenden Ansprüche, **dadurch gekennzeichnet, dass** sie ferner Reinigungsfilter zum Filtern der Prozessluft umfasst, die in der Schneidmühle und/oder im aerodynamischen Abscheider verwendet wird, bevor sie in die Atmosphäre ausgelassen wird.

## Revendications

1. Installation pour la mise au rebut d'une surface (1) en herbe synthétique, où la surface (1) comprend un gazon en herbe synthétique, comprenant au moins un tapis (3) sur lequel sont fixés de multiples fils (2) d'herbe synthétique, ladite installation comprenant :
- un granulateur mono-arbre et/ou un triturateur bi-arbre, aptes à arracher les fils d'herbe synthétique (2) du tapis (3),
- un moulin à lames apte à raffiner le gazon trituré pour séparer les fils d'herbe synthétique (2) du tapis (3) et réduire le tapis en granulés,
- un séparateur aérodynamique apte à effectuer une séparation des matériaux qui constituent le tapis (3) et les fils (2) d'herbe synthétique,
**caractérisé en ce que**
ladite surface (1) d'herbe synthétique comprend un intercalaire de remplissage (4),
ladite installation comprenant en outre :
- un tamis rotatif ayant des trous de 4/5 mm de diamètre destinés à séparer le gazon de l'intercalaire de remplissage (4), et
- un tamis centrifuge pour séparer les matériaux de l'intercalaire de remplissage (4)

2. Installation selon la revendication 1, **caractérisée en ce que** ledit tamis centrifuge prévoit un grillage métallique ayant « une lumière nette de maille » de dimensions égales à 800 µm.

3. Installation selon l'une quelconque des revendications précédentes, **caractérisée en ce que** ledit granulateur mono-arbre et/ou triturateur bi-arbre est apte à convertir le gazon en morceaux ayant des dimensions d'environ 100x300mm, et ledit moulin à lames présente au moins un grillage ayant des dimensions de passage comprises entre 3 et 5 mm environ,

4. Installation selon l'une quelconque des revendications précédentes, **caractérisée en ce que** ledit séparateur est du type avec air à dépression, apte à séparer les matériaux en réglant le flux d'air à l'aide de la force gravitationnelle en opposition à la force de dépression contenue dans l'appareil.

5. Installation selon l'une quelconque des revendications précédentes, **caractérisée en ce qu'**elle comprend également des filtres de dépuration pour filtrer l'air de processus utilisé dans ledit moulin à lames et/ou dans ledit séparateur aérodynamique avant son introduction en atmosphère.
